# EUROPEAN PATENT APPLICATION

(11) **EP 4 183 807 A1**
(43) Date of publication of application: **24.05.2023**
(21) Application number: 21209039.3
(22) Date of filing: 18.11.2021
(51) Int. Cl.: C08F 2/50, C08F 220/18, C09J 133/08

(54) **COPOLYMER AND HOT MELT COMPOSITIONS COMPRISING SAID COPOLYMER**

(71) Applicant: Henkel AG & Co. KGaA, 40589 Düsseldorf (DE)
(72) Inventor: Zimmermann, Lena, 40882 Ratingen (DE); Roschkowski, Thomas, 40229 Düsseldorf (DE); Schneider, Anja, 40547 Düsseldorf (DE)

(57) **Abstract**

The present application is directed to a copolymer obtained by free radical polymerization, said copolymer comprising, based on the total weight of monomers:
from 0.01 to 10 wt.% of a) at least one co-polymerizable photoinitiator having an ethylenically unsaturated group and a moiety that is decomposable under photo-irradiation to form a radical;
from 0.01 to 10 wt.% of b) at least one epoxy (meth)acrylate monomer having at least one (meth)acrylate group and at least one epoxide group; and,
from 80 to 99.98 wt.% of c) at least one ethylenically unsaturated monomer which does not bear an epoxide group or a moiety decomposable under photo-irradiation to form a radical.

The present application is further directed to a material which is crosslinkable under photoirradiation, said material comprising: a copolymer as defined above; and, at least one ionic photoacid generator (PAG).

## Description

### FIELD OF THE INVENTION

The present disclosure is directed to a copolymer which is cross-linkable under photo-irradiation, and which is derived from: a monomer having both epoxide and (meth)acrylate functionality; and, at least one co-polymerizable photoinitiator having an ethylenically unsaturated group and a moiety that is decomposable under photo-irradiation to form a radical. The present disclosure is also directed to reactive hot melt compositions comprising said copolymer. The present disclosure is still further directed to reactive hot melt pressure sensitive adhesive compositions which may have utility in the production of tapes, labels and decals.

### BACKGROUND TO THE INVENTION

As is known in the art, non-reactive hot melt compositions - such as non-reactive hot melt adhesive compositions - are formulated to be substantially free of water and solvents and to be solids at room temperature. The compositions are further formulated either to melt into or form a fluid state upon the application of heat: the compositions are applied to a given substrate in this fluid molten form but, after cooling, recover their solid or viscous liquid form. The phase formed after the composition has cooled is purposed with providing cohesive strength, toughness and resistance to both creep and heat. Non-reactive hot melt compositions are, however, thermoplastic and can be repeatedly heated to a fluid state and cooled to a solid or viscous liquid state.

Curable or reactive hot melt compositions are likewise solids or highly viscous liquids at room temperature and, upon application of heat, melt into a liquid or fluid state: they are applied to a substrate in this fluid molten form. Again, after cooling, the composition recovers its initial form. The phase formed after the composition has cooled - but before curing - is purposed with providing initial or wet strength. The applied composition is then cured by means of a chemical crosslinking reaction after being exposed to the requisite curing conditions. Prior to curing, the composition remains thermoplastic and can be re-melted and re-solidified but, once cured, the composition no longer has thermoplastic properties. The crosslinked composition is purposed with providing cohesive strength, toughness and resistance to both creep and heat. And generally curable hot melt compositions can provide higher strength and heat resistance than non-curable hot melt compositions.

A hot melt pressure sensitive adhesive composition is a hot melt adhesive which retains the ability to form a serviceable bond to an adherend under light pressure at room temperature. More particularly, such reactive or non-reactive adhesive compositions will demonstrate cold flow under finger pressure at room temperature.

The rapid development of wet strength through cooling of an applied hot melt composition can be important in commercial operations as it facilitates the processing of the treated substrates. However, the rapid curing of an applied reactive hot melt composition is not necessarily desirable as it can be deleterious to the workability of the applied composition. For example, moisture curing hot melt compositions may cure under ambient conditions and, immediately after application, may start to develop such strength that they may not easily be worked in production line devices which are downstream of the applicator.

It is thus evident that compositions that rapidly crosslink to provide cure strength will have a short working life. However, slowly cross-linked adhesive compositions will have a longer service life but produce less strength, delaying subsequent commercial operations. There is therefore a continual effort in the art to develop reactive hot melt compositions which possess a commercially desirable combination of wet strength, cure strength and working life.

Certain authors have focused on reactive hot melt compositions which may be cured upon photo-irradiation and, in particular, under ultraviolet light. Photocuring broadly offers flexibility as a crosslinking method since the user can determine the position and time at which photo-irradiation occurs and can moderate the exposure to that irradiation.

US Pat No. 3,661,618 (Firestone Fire and Rubber Company) , for example, provides a composition comprising a polymer, such as a cellulose derivative, a polyolefin or a polyester, liquid alkyl (meth)acrylate monomer and a further reactive monomer. After application of the adhesive, the monomers are crosslinked under high energy particle radiation in the essential absence of oxygen. Problematically however, the monomeric (meth)acrylates are volatile and have an irritant effect. To obviate the disadvantages of having a significant proportion of free monomers in the photo-curable compositions, the inclusion of copolymers having pendant photoreactive groups has been developed in the art.

EP 3 252 088 A1 (Henkel AG & Co. KgaA) describes an UV-curable pressure sensitive acrylic adhesive obtainable by reacting: in a first step a mixture comprising: (i) at least one acrylic monomer of formula (I) 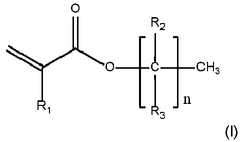 wherein: R¹ is H or CH₃; R² and R³ are both H or both CH₃; and, n is an integer from 0 to 22; and (ii) at least one monomer which comprises a pendant reactive functional group selected from cycloaliphatic epoxides, oxetanes, mono-substituted oxiranes or mixtures thereof; and, in a second step, reacting the obtained mixture from the first step with: (iii) at least one cationic photoinitiator; and, (iv) optionally further additives.

WO 2011112643A2 (Henkel Corporation) discloses an ultraviolet (UV) crosslinkable acrylic pressure sensitive adhesive comprising a cationic photoinitiator and an acrylic copolymer having pendant reactive functional groups selected from cycloaliphatic epoxide, oxetane or mixtures thereof.

EP2960258 A1 (Henkel AG & Co. KgaA) discloses a method for the production of a UV-curable acrylic copolymer, said method comprising: (a) polymerizing a mixture of monomers to form an acrylic copolymer, the monomer mixture comprising, based on the weight of said mixture: (i) 40-95 wt.% of at least one (meth)acrylate monomer; (ii) 5-60 wt.% of at least one co-polymerizable monomer, wherein said monomer is selected from those whose homopolymers have a glass transition temperature of higher than -30°C, and, iii) optionally 0.5-20 wt.% of at least one co-polymerizable functional monomer having a functional group selected from the group consisting of a hydroxyl group and a carboxyl group; and, (b) reacting the acrylic copolymer with at least one type of monomer comprising a UV-curable functional group in the presence of a catalyst to form the UV-curable acrylic copolymer, wherein said monomers comprising a UV-curable group are monomers that comprise a vinyl and an epoxy group, preferably epoxy-functionalized acrylates and more preferably glycidyl esters of (meth)acrylic acid.

EP-A-0 017 364 (Rohm & Haas) describes copolymers which may be used in *inter alia* adhesives and sealants, which copolymers comprise from 0.1 to 10 wt.% by weight of allylbenzoyl benzoate as a co-polymerized photoinitiator. Although these materials can be crosslinked using UV radiation, it is considered that their reactivity towards such radiation is too low, leading to low curing efficiency particularly at deeper point in layers of the material. Moreover, layers produced from the copolymers are not considered sufficiently tacky for certain adhesive applications.

The low reactivity and inefficiency of crosslinking copolymers comprising from 0.01 to 5 wt.% of co-polymerizable 2-alkoxy-2-phenyl-2-benzoylethyl acrylate is also considered a disadvantage of the teaching of US Patent No. 4,144,157 (BeiersdorfAG).

In practice, low curing efficiency of copolymers comprising co-polymerizable photoinitiators might be moderated for by using lower coating weights of hot melt compositions or by increasing the dosage of the applied irradiation. These solutions may not however be desirable or, indeed viable in certain applications.

### STATEMENT OF THE INVENTION

In accordance with a first aspect of the invention, there is provided a copolymer obtained by free radical polymerization, said copolymer comprising, based on the total weight of monomers: from 0.01 to 10 wt.% of a) at least one co-polymerizable photoinitiator having an ethylenically unsaturated group and a moiety that is decomposable under photo-irradiation to form a radical; from 0.01 to 10 wt.% of b) at least one epoxy (meth)acrylate monomer having at least one (meth)acrylate group and at least one epoxide group; and, from 80 to 99.98 wt.% of c) at least one ethylenically unsaturated monomer which does not bear an epoxide group or a moiety decomposable under photo-irradiation to form a radical.

In an importance embodiment, the copolymer comprises, based on the total weight of monomers: from 0.05 to 5 wt.%, preferably from 0.05 to 2.5 wt.% of a) said at least one co-polymerizable photoinitiator having an ethylenically unsaturated group and a moiety that is decomposable under photo-irradiation to form a radical; from 0.5 to 5 wt.%, preferably from 0.5 to 2.5 wt.% of b) said at least one epoxy (meth)acrylate monomer having at least one (meth)acrylate group and at least one epoxide group; and from 90 to 99 wt.%, preferably from 95 to 99 wt.% of c) said at least one ethylenically unsaturated monomer which does not bear an epoxide group or a moiety decomposable by photo-irradiation to form a radical.

Typically, said at least one co-polymerizable photoinitiator a) may be represented by the general formula A-(B)_{b}, wherein: A represents a substituent having a valency b which comprises at least one moiety decomposable under photo-irradiation to form a radical; B represents a moiety comprising an ethylenically unsaturated group; and, b is an integer equal to 1 or 2, typically 1. It is preferred that, in general formula A-(B)_{b}: A represents a substituent having a valency b which comprises at least one moiety decomposable under photo-irradiation to form a radical, the or each said moiety comprising a group selected from acetophenone, benzophenone, benzoin, anthraquinone, 9-fluorenone, anthrone, xanthone, thioxanthone, acridone, dibenzosuberone or chromone; B represents a moiety comprising a (meth)acrylate group or a (meth)acrylamide group; and, b is 1 or 2, typically 1.

Good results have been obtained where the or each polymerizable photoinitiator is benzophenone (meth)acrylate.

It is preferred that the or each epoxy (meth)acrylate monomer included in the copolymer is characterized by an equivalent weight of the total of said epoxide and said (meth)acrylate groups of from 100 to 700 g/eq, preferably 120 to 320 g/eq.

Conventionally, the or each epoxy (meth)acrylate monomer included in the copolymer is an adduct of (meth)acrylic acid and a polyepoxide compound. Illustrative polyepoxide compounds for the formation of such adducts may be selected from the group consisting of: polyglycidyl ethers of polyhydric alcohols; polyglycidyl ethers of polyhydric phenols; polyglycidyl esters of polycarboxylic acids; and, epoxidized polyethylenically unsaturated hydrocarbons.

In accordance with a second aspect of the present invention there is provided a material which is crosslinkable under photoirradiation, said material comprising: a copolymer as defined herein above and in the appended claims; and, at least one ionic photoacid generator (PAG).

The invention further provides a reactive hot melt composition which is crosslinkable under photoirradiation, said composition comprising, based on the weight of the composition: from 40 to 99.99 wt.% of i) at least one copolymer as defined herein above and in the appended claims; from 0.01 to 10 wt.% of ii) at least one ionic photoacid generator (PAG); from 0 to 60 wt.% of iii) at least one tackifying resin; and, from 0 to 20 wt.% of iv) wax.

Such hot melt compositions combine two photo-curing mechanism and are considered to demonstrate an important combination of properties. Firstly, upon curing, the compositions demonstrate high thermal stability particularly as compared to standard cationic polymers. Secondly, such thermal stability is demonstrated even at low coating weights of the hot melt compositions because the hybrid photoinitiator system is efficient and permits through-curing of the compositions. These properties are evidenced in the Examples of this disclosure. It is further noted that the hot melt compositions can be formulated to cure at two different wavelengths, thereby permitting the degree of crosslinking in the composition to be controlled.

Coatings, adhesives or sealants obtained by the crosslinking under photoirradiation of the reactive hot melt composition as defined herein above are considered a further aspect of the present invention. Hot melt pressure sensitive adhesive (HMPSA) compositions are an important embodiment of this aspect.

The disclosure still further provides an article (A) comprising a curable film of the hot melt compositions as defined above, said film being disposed on a release liner and / or a carrier substrate. The article (A) may be a label, a single-sided tape, a transfer tape or a double-sided tape.

### DEFINITIONS

As used herein, the singular forms *"a", "an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified. For completeness, the term *"comprising"* encompasses *"consisting of".*

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0"* specifically includes 0 wt.%: the ingredient defined by said range may or may not be present in the composition.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature (RT) is 23°C plus or minus 2°C. As used herein, *"ambient conditions"* means the temperature and pressure of the surroundings in which the composition is located or in which an adhesive, sealant, coating, or composite structure obtained from said composition is located.

As used herein, the term *"water"* is intended to encompass tap water, spring water, purified water, de-ionized water, de-mineralized and distilled water. Water is included in the compositions of the present invention in its liquid form. The presence of solid water particles - ice - is not desirable as solid water cannot be mobilized for the formation of the hydrates required for the development of strength in cured composition.

As used herein *"basicity"* means the quality of being a base, not an acid. More particularly, in accordance with the Lewis theory of acids and bases, a base is an electron-pair donor. This definition encompasses but is not limited to Brønsted-Lowry bases, which compounds act as proton acceptors.

As used herein, the terms *"monomer"* and *"co-monomer"* refer to a molecule that is capable of conversion to polymers, synthetic resins or elastomers by combination with itself or other similar molecules or compounds. The terms are not limited to small molecules but include oligomers, polymers and other large molecules capable of combining with themselves or other similar molecules or compounds.

As used herein, *"macro-monomer"* refers to a polymer having at least one functional group through which polymerization reactions can proceed. Macro-monomers are thus macromolecular monomers which can be converted to homo- or copolymers of defined structures. It is not precluded that a macro-monomer as used herein comprises more than one polymeric chain attached to one functional group.

As used herein, the term *"(co)polymer"* includes homopolymers, copolymers, block copolymers and terpolymers.

As used herein, *"polymerization conditions"* are those conditions that cause the at least one monomer to form a polymer, such as temperature, pressure, atmosphere, ratio of starting components used in the polymerization mixture, reaction time, or external stimuli of the polymerization mixture. The polymerization process can be carried out in bulk, or solution, or other conventional polymerization modes. The process is operated at any of the reaction conditions appropriate to the polymerization mechanism.

The term *"free radical polymerization"* refers to the performance of polymerization of a monomer composition in the presence of a polymerization initiator which, under polymerization conditions, forms radicals either by thermal decomposition, photochemical decomposition or by a redox reaction.

As used herein, the term *"free radical initiator"* refers to any chemical species which, upon exposure to sufficient energy - in the form of light or heat, for example - decomposes into two parts which are uncharged, but which each possess at least one unpaired electron. Thus a thermal free radical initiator generates free upon exposure to heat. And known thermal free radical initiators include, but are not limited to, peroxide compounds, azo compounds and persulfate compounds.

The term *"photoinitiator"* as used herein denotes a compound which can be activated by an energy-carrying activation beam - such as electromagnetic radiation - upon irradiation therewith. Specifically, a *"free-radical photoinitiator"* herein refers to a photoactive compound that generates free radicals, which radicals could herein initiate polymerization or reaction by addition to C=C double bonds present in the compositions. Such free-radical photoinitiators are conventionally categorized into Norrish type I and Norrish type II photoinitiators. A Norrish type I radical photoinitiator undergoes the Norrish type I reaction when exposed to actinic radiation: said reaction is defined by IUPAC as α-cleavage of an excited carbonyl compound leading to an acyl-alkyl radical pair (from an acyclic carbonyl compound) or an acyl-alkyl biradical (from a cyclic carbonyl compound) as a primary photoproduct. A Norrish type II radical photoinitiator undergoes the Norrish type II reaction when exposed to actinic radiation: that reaction is defined by IUPAC as the photochemical abstraction of a γ-hydrogen by an excited carbonyl compound to produce a 1,4-biradical as a primary photoproduct.

The term *"aprotic solvents"* as used herein refers to solvents that do not yield or accept a proton. Conversely *"protic solvents"* are those solvents capable of yielding or accepting a proton. The *"polar solvent"* as used herein refers to a solvent having a dielectric constant (ε) of more than 5 as measured at 25°C: the term encompasses both aprotic and protic solvents. The determination of dielectric constant (ε) is well known in the art and is within the knowledge of the skilled person: the use of measured voltages across parallel plate capacitors in such determinations may be mentioned.

As used herein, the term softening point (°C.) used in regard to tackifiers and waxes herein is the Ring & Ball softening point, which is measured unless otherwise indicated according to ASTM E28.

The term *"hot-melt"* as used herein describes a composition that is substantially non-flowable at room temperature, but converts to a flowable state at an elevated, application temperature of, for example, from 100° to 160°C. The compositions of the present invention do, however, demonstrate *"cold flow"* which herein refers to the distortion or viscous flow of the composition at room temperature under applied pressure, especially finger pressure. The compositions does not exhibit a liquid to solid transition and generally do not return to their original dimensions when the pressure is removed.

As used herein, the term *"release liner"* refers to a thin flexible sheet which, after being placed in intimate contact with a pressure-sensitive adhesive surface may be subsequently removed without damaging the adhesive coating. Illustrative materials of which the release liner may comprise or consists include: polyethylene; polypropylene; polyesters, such as polyethylene terephthalate (PET) and polybutylene terephthalate (PBT); cellulose acetate; polyvinylchloride; polyvinylidene fluoride; and, paper substrates coated or laminated with the aforementioned thermoplastics. For completeness, the coated papers or thermoplastic materials are often siliconized or otherwise treated with a release agent to impart improved release characteristics.

As is known in the art, release liners are typically left in place for storage and transport and only removed when a bonding operation is to be performed. The release liners thereby perform a number of functions, including preventing contamination of the composition, facilitating handling thereof, providing support thereto and providing for the conveyance of information or identifying data.

As used herein, the term *"carrier"* refers to a material onto which a curable film of a hot melt pressure sensitive adhesive composition can be coated so as to stabilize the film. The carrier can add thickness to the article so as to improve handling. The carrier substrate differs from a release liner in that it cannot be removed from the curable film without deleteriously effecting the integrity of the curable film. The carrier may be flexible and may conventionally be selected from polymeric films, metal foils, foams, cloths, and combinations thereof. For example, the carrier substrate may be selected from the group consisting of polyester, polypropylene, polyethylene, foam and paper.

As used herein, the term *"transfer coating"* refers to a layer or film of pressure-sensitive adhesive, which is not supported by a backing.

Where the viscosity of the composition is mentioned herein, this viscosity has been measured at the stated temperature, employing a Thermosel heating chamber and a Brookfield Viscometer, Spindle 27 at 5 rpm, according to ASTM D 3236-88.

As used herein, the term *"application temperature"* will refer to the temperature at which the viscosity of the composition is such it will be substantially fluid and can be deposited as a fluid onto a substrate by contact or non-contact techniques.

As used herein, the term *"equivalent (eq.")* relates, as is usual in chemical notation, to the relative number of reactive groups present in the reaction.

The term *"equivalent weight"* as used herein refers to the molecular weight divided by the number of a function concerned. As such, *"epoxide equivalent weight"* (EEW) means the weight of resin, in grams, that contains one equivalent of epoxide.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine and phenyl.

As used herein, *"(meth)acryl"* is a shorthand term referring to *"acryl"* and/or *"methacryl".* Thus the term *"(meth)acrylate"* refers collectively to acrylate and methacrylate.

As used herein, "*C₁-Cₙ alkyl*" group refers to a monovalent group that contains 1 to n carbons atoms, that is a radical of an alkane and includes straight-chain and branched organic groups. As such, a "*C₁-C₁₈ alkyl*" group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "*C₁-Cₙ hydroxyalkyl"* as used herein refers to a HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: nonlimiting examples thereof are a methoxy group, an ethoxy group and an iso-propyloxy group. The term "*C₁-C₁₂ alkoxyalkyl"* as used herein refers to an alkyl group having an alkoxy substituent as defined above and wherein the moiety (*alkyl-O-alkyl*) comprises in total from 1 to 12 carbon atoms: such groups include methoxymethyl (-CH₂OCH₃), 2-methoxyethyl (-CH₂CH₂OCH₃) and 2-ethoxyethyl.

The term "*C₂-C₆ alkylene"* as used herein, is defined as saturated, divalent hydrocarbon radical having from 2 to 6 carbon atoms. In general in the present disclosure, such alkylene groups may be unsubstituted or may be substituted with one or more halogen. Specifically within monomers of Formula (I) hereinbelow, such alkylene groups (X) may optionally be substituted by one or more group selected from halogen, OH or COOH.

The term "*C₃-C₃₀ cycloalkyl"* is understood to mean a saturated, mono- or polycyclic hydrocarbon group having from 3 to 30 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

The term "*C₃-C₃₀ hydroxycycloalkyl*" as used herein refers to a HO-(cycloalkyl) group having from 3 to 30 carbon atoms, where the point of attachment of the substituent is through the oxygen-atom and the cycloalkyl group is as defined above.

As used herein, "*C₃-C₃₀ cycloalkylene"* means a divalent radical formed by the removal of two hydrogen atoms from one or more rings of a cycloalkyl group having from 3 to 30 carbon atoms.

As used herein, an "*C₆-C₁₈ aryl*" group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

The "*C₆-C₁₈ arylene"* means a divalent group formed by the removal of two hydrogen atoms from one or more rings of C₆-C₁₈ aryl group as defined above, wherein hydrogen atoms may be removed from the same or different rings. Nominative examples include phenylene and napthylene.

As used herein, "*C₂-C₂₀ alkenyl*" refers to hydrocarbyl groups having from 2 to 20 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "E" and "Z" configurations, as appreciated by those of ordinary skill in the art. Examples of said C₂-C₂₀ alkenyl groups include, but are not limited to: -CH=CH₂; - CH=CHCH₃; -CH₂CH=CH₂; -C(=CH₂)(CH₃); -CH=CHCH₂CH₃; -CH₂CH=CHCH₃; - CH₂CH₂CH=CH₂; -CH=C(CH₃)₂; -CH₂C(=CH₂)(CH₃); -C(=CH₂)CH₂CH₃; -C(CH₃)=CHCH₃; - C(CH₃)CH=CH₂; -CH=CHCH₂CH₂CH₃; -CH₂CH=CHCH₂CH₃, -CH₂CH₂CH=CHCH₃; - CH₂CH₂CH₂CH=CH₂; -C(=CH₂)CH₂CH₂CH₃; -C(CH₃)=CHCH₂CH₃; -CH(CH₃)CH=CHCH, - CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, "*alkylaryl*" refers to alkyl-substituted aryl groups, both groups being defined as above. Further, as used herein "*aralkyl*" means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*"*,* "*heterocycloalkyl*" and "*heteroaryl*" moieties are alkyl, cycloalkyl and aryl groups as defined hereinabove, respectively, containing N, O, Si or S as part of their structure.

The present compositions may be defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) effect on the desired properties of the composition. An exemplary trace amount is less than 1000 ppm by weight of the composition.

The term *"substantially free"* encompasses those embodiments where the specified compound, element, ion, or other like component is completely absent from the composition or is not present in any amount measurable by techniques generally used in the art.

The term *"anhydrous"* as used herein has equivalence to the term *"substantially free of water".* Water is not deliberately added to a given composition and is present, at most, in only trace amounts which will have no (adverse) effect on the desired properties of the composition.

### DETAILED DESCRIPTION OF THE INVENTION

### MONOMERS OF THE COPOLYMER

### a) Co-polymerizable Photoinitiator

The copolymer of the present disclosure comprises from 0.01 to 10 wt.%, based on the total weight of monomers, of a) at least one co-polymerizable photoinitiator having an ethylenically unsaturated group and a moiety that is decomposable under photo-irradiation to form a radical. It is preferred that the copolymer comprises, based on the total weight of monomers, from 0.05 to 5 wt.%, preferably from 0.05 to 2.5 wt.%, of a) said least one co-polymerizable photoinitiator.

The decomposition of the aforementioned moiety to form radicals causes the cross-linking of the copolymer, therefore forming a cross-linked product. The amount of said at least copolymerizable photoinitiator a) in the copolymer needs to be sufficient to enable a sufficient crosslinking ability of the resulting copolymer upon irradiation yet should not be too high so as to promote a deterioration of the adhesive properties or breathable properties of the final crosslinked product.

At its broadest, said at least one copolymerizable photoinitiator may be denoted by the formula A-(B)_{b}, wherein: A represents a substituent having a valency b which comprises at least one moiety decomposable under photo-irradiation to form a radical; B represents a moiety comprising an ethylenically unsaturated group; and, b is an integer of from 1 to 3, preferably 1 or 2. For example, substituent B may comprise a (meth)acrylate group or a (meth)acrylamide group and moiety A may represent a substituent having a valency b which comprises at least one moiety decomposable under photo-irradiation to form a radical, the or each said moiety comprising a group selected from acetophenone, benzophenone, benzoin, anthraquinone, 9-fluorenone, anthrone, xanthone, thioxanthone, acridone, dibenzosuberone or chromone. In particular, moiety A may include an acetophenone, benzophenone or benzoin group.

In an important embodiment of the present invention, a) said at least one co-polymerizable photoinitiator comprises or consists of at least one monomer in accordance with Formula (I): 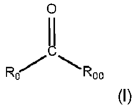
wherein: R⁰ is a C₁-C₄ alkyl, C₆-C₁₈ aryl or R⁰⁰; and, R⁰⁰ has the structure; 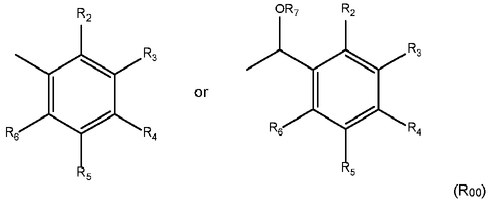
wherein: R² to R⁶ are independently selected from H, OH, SH, halide, CN, C₁-C₄ alkyl, C₁-C₄ alkoxy, SR⁸, COOH, COOR⁸, N(R⁸)₂ or N(R⁸)₃Q; R⁷ is H or C₁-C₄ alkyl; each R⁸ is independently selected from C₁-C₆ alkyl or C₆-C₁₈ aryl; Q is halide, acetate, phosphate, sulphate or nitrate, subject to the proviso that j of the radicals R² to R⁶ are a radical 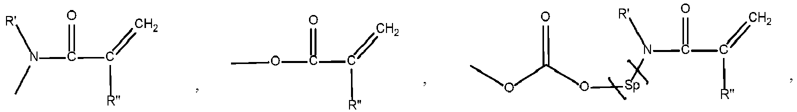 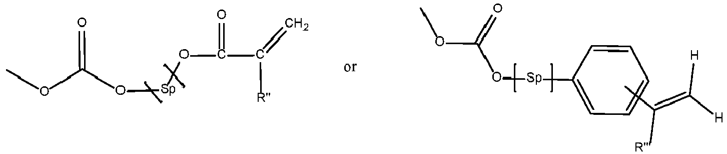
wherein: j is an integer of from 1 to 3, preferably 1 or 2; each R' is independently selected from H, C₁-C₄ alkyl or C₆-C₁₈ aryl; R" is H or C₁ alkyl; R"' is H or C₁ alkyl; and, Sp denotes a spacer group of the following type: -[-{(X)ₖ-Y}ₗ-(X)ₘ-]- Or -[-{(X)ₖ-Y}ₗ-{(X)ₘ-Y}ₙ]-
wherein: k is an integer of from 1 to 10; I is in an integer of from 0 to 25; m is an integer of from 1 to 10; n is an integer of from 0 to 25; each X is independently selected from C₂-C₁₂ alkylene, C₃-C₁₈ cycloalkylene or C₆-C₁₈ arylene; and, each Y is a divalent radical independently selected from the group consisting of:

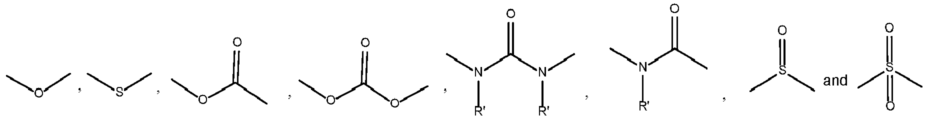

Within Formula (I), the following preferences may be noted. These preferences are independent of one another but are not mutually exclusive: any combination of said preferences may be made.

R⁰ is preferably C₁-C₄ alkyl or C₆ aryl; R² to R⁶ are preferably independently selected from H, OH, C₁-C₄ alkyl and C₁-C₄ alkoxy and more preferably are independently selected from H and C₁-C₄ alkyl;
R⁷ is preferably C₁ alkyl; each R⁸ is preferably independently selected from C₁-C₆ alkyl and more preferably independently selected from C₁-C₄ alkyl; and, each R' is preferably independently selected from H, C₁-C₄ alkyl or C₆ aryl.

Without intention to limit the present invention, illustrative copolymerizable photoinitiators which may have utility in the present disclosure include benzophenone (meth)acrylate, benzophenone (meth)acrylamide, acetophenone (meth)acrylate and benzophenone derivatives having the following structure:

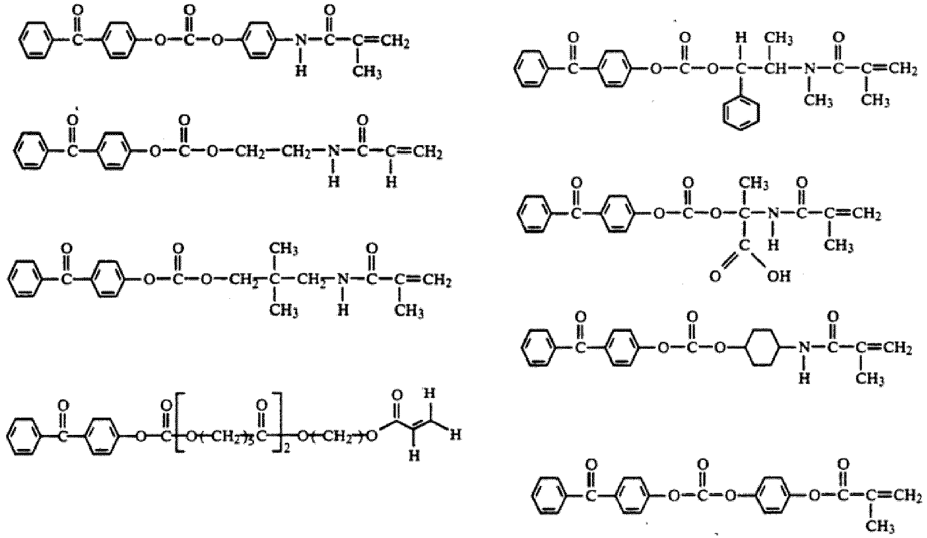

A particular preference may be mentioned for the use, as a copolymerizable photoinitiator, of benzophenone methacrylate.

### b) Epoxy (meth)acrylate monomers

The copolymer of the present disclosure comprises from 0.01 to 10 wt.%, based on the total weight of monomers, of b) at least one epoxy (meth)acrylate monomer, said monomer having at least one (meth)acrylate group and at least one epoxide group. It is preferred that the copolymer comprises, based on the total weight of monomers, from 0.05 to 5 wt.%, preferably from 0.5 to 5 wt.% and more preferably from 0.5 to 2.5 wt.%, of b) said least one epoxy (meth)acrylate compound.

The or each epoxy (meth)acrylate monomer included in the copolymer should preferably be characterized by an equivalent weight of the total of said epoxide and said (meth)acrylate groups of from 100 to 700 g/eq, in particular from 120 to 320 g/eq.

The epoxy (meth)acrylate monomer is obtainable via the reaction of acrylic acid or methacrylic acid with a polyepoxide compound at stoichiometric ratio such that at least one (meth)acrylate group and at least one epoxide group are retained in the obtained adduct. An epoxy monomer with a desired (meth)acrylation proportion can be obtained by suitably changing the amounts of polyepoxide compound and (meth)acrylic acid to be reacted. For instance, the amount of (meth)acrylic acid to be reacted per equivalent of epoxide group should be from 0.1 to 0.7 equivalents.

Without intention to limit the present invention, suitable reactant polyepoxide compounds may be liquid, solid or in solution in solvent. Based on the above characterization, such reactant polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be reacted with (meth)acrylic acid, mention may be made of: polyglycidyl ethers of polyhydric alcohols and polyhydric phenols; polyglycidyl esters of polycarboxylic acids; and epoxidized polyethylenically unsaturated hydrocarbons.

The use of diepoxide compounds is preferred. For instance, suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred reactant polyepoxide compounds include: diglycidyl ethers of cyclohexane diol; 1,2-epoxy-4-(epoxyethyl)cyclohexane; bisphenol-A epoxy resins; bisphenol-F epoxy resins; bisphenol-A/F epoxy resin blends; polypropylene glycol diglycidyl ethers, such as DER^{™} 732; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60

It will be noted that the polyepoxide compounds useful in forming the epoxy acrylate adducts may be monomeric or oligomeric. It is considered that the inclusion of monomeric epoxy (meth)acrylate monomers in the present polymer will generally yield a cured product having hard, abrasion-resistant characteristics. Conversely, the inclusion of oligomeric multifunctional (meth)acrylates will generally yield a slightly softer, but more flexible cured product. Of course, the use of both monomeric and oligomeric epoxy (meth)acrylate monomers might balance the desired properties of the cured product.

As will be recognized by the skilled artisan, the partial (meth)acrylation of the epoxide functional groups of a reactant polyepoxide is typically performed in the presence of a basic catalyst, of which mention may be made of triphenylphosphine (PPh₃), N,N'-dimethyltoluidine, pyridine, imidazole, triethylamine and tributylamine. The retention of such catalysts in the partially acrylated end-product can, however, be deleterious to the storage stability of that product. In order to prevent cross-linking reactions during storage - and the concomitant thickening and gelation of the product - the catalyst residue should desirably be removed from the epoxy (meth)arylate monomer before it is used in the formation of the copolymer. Illustrative methods for removing residual catalyst are disclosed *inter alia* in: WO2011/078113; JP-Hei-5-332031; JP-Hei-11-012345; JP 2002-145984 A; JP 2004-244543; JP 2013-103950; and, JP2019-052273A.

In an alternative embodiment, a polymerization inhibitor - such as a quinone or quinone methide - might be added to the partially (meth)acrylated reaction product prior to its storage. However, this is not necessarily preferred as such inhibitors constitute an impurity which would be present in the polymerization reaction yielding the copolymer.

The above aside, suitable epoxy (meth)arylate monomers having at least one (meth)acrylate group and at least one epoxide group may be obtained from commercial sources. Representative commercial epoxy (meth)arylate monomers include but are not limited to: glycidyl methacrylate (GMA) available from Sigma Aldrich; Uvacure^{®} 1561 and Uvacure^{®} 1562 available from Daicel-Allnex Ltd.; and, HCT-1 available from Henkel Corporation; Synas S-100 (3,4-epoxycyclohexyl methyl methacrylate) available from Synasia.

### c) Ethylenically unsaturated monomer

The copolymer of the present disclosure comprises from 80 to 99.98 wt.%, based on the total weight of monomers, of c) at least one ethylenically unsaturated monomer, which monomer(s) do not bear epoxide groups or a moiety decomposable by photo-irradiation. It is preferred that the copolymer comprises from 90 to 99 wt.%, for example from 95 to 99 wt.% of c) said at least one ethylenically unsaturated monomer, based on the total weight of monomers. Such monomers can, in principle, be any ethylenically unsaturated monomer. However, the invention is particularly applicable to compositions of which (meth)acrylate monomers constitute at least 70 wt.%, preferably at least 75 wt.%, of the total amount of ethylenically unsaturated monomers present in copolymer.

### c) i) Aliphatic and Cycloaliphatic (Meth)acrylate Monomers

The copolymer may comprise c) i) at least one (meth)acrylate monomer represented by Formula CI:

H₂C=CGCO₂R¹ (CI)

wherein: G is hydrogen, halogen or a C₁ alkyl group; and, R¹ is selected from: C₁-C₃₀ alkyl; C₁-C₁₈ hydroxyalkyl; C₁-C₁₈ alkoxyalkyl; C₂-C₃₀ heteroalkyl; C₃-C₃₀ cycloalkyl; C₂-C₈ heterocycloalkyl; C₂-C₂₀ alkenyl; and, C₂-C₁₂ alkynyl.

For example, R¹ may be selected from: C₁-C₁₈ alkyl, C₁-C₁₂ hydroxyalkyl; C₂-C₁₈ heteroalkyl, C₃-C₁₈ cycloalkyl; C₂-C₈ heterocycloalkyl; C₂-C₈ alkenyl, and, C₂-C₈ alkynyl.

Desirably, said monomer(s) c) i) are characterized in that R¹ is selected from C₁-C₁₈ alkyl, C₁-C₆ hydroxyalkyl and C₃-C₁₈ cycloalkyl.

Examples of (meth)acrylate monomers c) i) in accordance with Formula (CI) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; and, perfluorooctyl (meth)acrylate.

### c) ii) Aromatic (Meth)acrylate Monomers

The copolymer may comprise c) ii) at least one (meth)acrylate monomer represented by Formula CII:

H₂C=CQCO₂R² (CII)

wherein: Q may be hydrogen, halogen or a C₁ alkyl group; and, R² may be selected from C₆-C₁₈ aryl, C₁-C₉ heteroaryl, C₇-C₁₈ alkoxyaryl, C₇-C₁₈ alkaryl and C₇-C₁₈ aralkyl.

Exemplary (meth)acrylate monomers c) ii) in accordance with Formula (CII) - which may be used alone or in combination - include but are not limited to: benzyl (meth)acrylate; phenoxyethyl (meth)acrylate; and, phenoxypropyl (meth)acrylate.

### c) iii) (Meth)acrylate-functionalized Oligomer

The copolymer may comprise c) iii) at least one (meth)acrylate functionalized oligomer selected from the group consisting of (meth)acrylate-functionalized polyurethanes, (meth)acrylate-functionalized polybutadienes, (meth)acrylic polyol (meth)acrylates, polyester (meth)acrylate oligomers, polyamide (meth)acrylate oligomers and polyether (meth)acrylate oligomers.

Said oligomers c) iii) may have one or more acrylate and / or methacrylate groups attached to the oligomeric backbone, which (meth)acrylate functional groups may be in a terminal position on the oligomer and / or may be distributed along the oligomeric backbone. It is preferred that the or each (meth)acrylate functionalized oligomer c) iii) reacted as a monomer in deriving the copolymer: has two or more (meth)acrylate functional groups per molecule; and / or, has a weight average molecular weight (Mw) of from 300 to 1000 daltons.

### c) iv) Further ethylenically unsaturated monomers

The present invention does not preclude the inclusion in the copolymer of additional ethylenically unsaturated monomers not conforming to the definitions of c) i) - iii) given herein. However, the addition of such further monomers should be constrained by the condition that said further monomers c) iv) do not exceed 30 wt.% of the total amount of ethylenically unsaturated monomers.

Without intention to limit the present invention, such further ethylenically unsaturated monomers may include: α,β-monoethytenicatty unsaturated monocarboxylic acids; α,β-monoethytenicatty unsaturated dicarboxylic acids; C₁-C₆ alkyl half-esters of α,β-monoethytenicatty unsaturated dicarboxylic acids; α,β-monoethytenicatty unsaturated tricarboxylic acids; C₁-C₆ alkyl esters of α,β-monoethylenically unsaturated tricarboxylic acids bearing at least one free carboxylic acid group; ethylenically unsaturated sulfonic acids, such as vinylsulfonic acid, styrenesulfonic acid and acrylamidomethylpropanesulfonic acid; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as (meth)acrylonitrile; amide group containing vinyl monomers, such as (meth)acrylamide; vinyl esters, such as vinyl acetate, vinyl propionate, vinyl pivalate, vinyl benzoate and monomers of the VEOVA^{™} series available from Shell Chemical Company; vinyl and vinylidene halides; vinyl ethers such as vinyl ethyl ether; vinyl ketones including alkyl vinyl ketones, cycloalkyl vinyl ketones, aryl vinyl ketones, arylalkyl vinyl ketones, and arylcycloalkyl vinyl ketones; aromatic or heterocyclic aliphatic vinyl compounds; poly(meth)acrylates of alkane polyols, such as ethylene glycol di(meth)acrylate, propylene glycol di(meth)acrylate, butylene glycol di(meth)acrylate, neopentyl glycol di(meth)acrylate, hexylene glycol di(meth)acrylate, trimethylolpropane tri(meth)acrylate, glycerin tri(meth)acrylate, and pentaerythritol tetra(meth)acrylate; poly(meth)acrylates of oxyalkane polyols such as diethylene glycol di(meth)acrylate, dipropylene glycol di(meth)acrylate, triethylene glycol di(meth)acrylate, tetraethylene glycol di(meth)acrylate, dibutylene glycol di(meth)acrylate, di(pentamethylene glycol)dimethacrylate; polyethylene glycol di(meth)acrylates; and, bisphenol-A di(meth)acrylates, such as ethoxylated bisphenol-A (meth)acrylate ("EBIPMA").

Representative examples of other ethylenically unsaturated polymerizable monomers c) iv) include, without limitation: ethylene glycol dimethacrylate (EGDMA); fumaric, maleic, and itaconic anhydrides, monoesters and diesters with C₁-C₄ alcohols such as methanol, ethanol, propanol, isopropanol, butanol, isobutanol, and tert-butanol. Representative examples of vinyl monomers include, without limitation, such compounds as: vinyl acetate; vinyl propionate; vinyl ethers, such as vinyl ethyl ether; and, vinyl ethyl ketone. Representative examples of aromatic or heterocyclic aliphatic vinyl compounds include, without limitation, such compounds as styrene, α-methyl styrene, vinyl toluene, tert-butyl styrene, 2-vinyl pyrrolidone, 5-ethylidene-2-norbornene and 1-, 3-, and 4-vinylcyclohexene.

For completeness, whilst the above described co-polymerizable acid monomers should typically be used in the form of free acid, it is not precluded that the constituent acid groups of the monomers be partially or completely neutralized with suitable bases, provided this does not compromise their participation in co-polymerization.

### FORMATION OF THE COPOLYMERS BY FREE RADICAL POLYMERIZATION

The copolymers of the present disclosure are prepared by free radical polymerization. As would be recognized by the skilled practitioner, free radical polymerization is constituted by three stages: initiation, wherein the decomposition of an initiator generates active free radicals which, possessing unpaired electrons, react with the monomers present to generating an initiating radicals chain; propagation, wherein the formed initiating radicals chain attacks a second monomer molecule transferring its active center to the attacked molecule, which process is repeated, growing the polymer chain; and, termination, wherein the growth of macromolecular chains stops, and the polymerization terminates by disabling the active center. The two most common termination mechanisms in radical polymerizations are combination and deprotonation.

Free radical polymerization may be performed in bulk, in emulsion, in suspension or in solution. Without specific intention to limit the present invention, the copolymers are preferably prepared by free radical solution polymerization: by this is meant that a solution of the monomers in a solvent, which is also capable of dissolving the copolymer is polymerized by a free radical polymerization, that is in the presence of the polymerization initiator. The concentration of the monomers in the solution may vary but it will be typical for the ratio by weight of monomer to solvent to be in the range from 1:20to 2:1, for example from 1:2 to 1.5:1.

The free radical solution polymerization reaction should desirably be carried out in the presence of a polar solvent having a boiling point of at least 20°C, for instance at least 30°C or at least 40°C, as measured at 1 atmosphere pressure (1.01325 Bar). Examples of such polar solvents, which may be used alone or in combination, include but are not limited to: water; C₁-C₈ alkanols such as methanol, ethanol, n-propanol, isopropanol, n-butanol, sec-butanol and isobutanol; acetonitrile; N,N-di(Ci-C₄)alkylacylamides, such as N,N-dimethylformamide (DMF) and N,N-dimethylacetamide (DMAc); hexamethylphosphoramide; N-methylpyrrolidone; pyridine; esters, such as (C₁-C₈)alkyl acetates, ethoxydiglycol acetate, dimethyl glutarate, dimethyl maleate, dipropyl oxalate, ethyl lactate, benzyl benzoate, butyloctyl benzoate and ethylhexyl benzoate; ketones, such as acetone, ethyl ketone, methyl ethyl ketone (*2-butanone*) and methyl isobutyl ketone; ethers, such as tetrahydrofuran (THF), 2-methyltetrahydrofuran (2-MeTHF) and 1,2-dimethoxyethane; 1,3-dioxolane; dimethylsulfoxide (DMSO); and, dichloromethane (DCM). In an exemplary embodiment, the polymerization reaction is performed in the presence of a (C₁-C₈)alkyl acetate and, in particular ethyl acetate.

As noted above, the free radical polymerization will be triggered by means of at least one radical generating thermal initiator. As will be understood by a person skilled in the art, a thermal initiator is a compound which can be activated by thermal energy to generate a radical thereof upon, for instance, heating or irradiation of the infrared or microwave wavelength regions. The polymerization composition should conventionally comprise from 0.1 to 1 wt.%, for example from 0.1 to 0.5 wt.% of said at least one radical generating thermal initiator, based on the total weight of the polymerizable monomers.

Without intention to limit the present invention, an exemplary class of radical generating thermal initiators suitable for use herein are organic peroxides, selected for example from: cyclic peroxides; diacyl peroxides; dialkyl peroxides; hydroperoxides; peroxycarbonates; peroxydicarbonates; peroxyesters; and, peroxyketals.

While certain peroxides - such as dialkyl peroxides - have been disclosed as useful initiators in *inter alia* US Patent No. 3,419,512 (Lees) and US Patent No. 3,479,246 (Stapleton) and indeed may have utility herein, hydroperoxides represent a preferred class of initiator for the present invention. Further, whilst hydrogen peroxide itself may be used, the most desirable polymerization initiators are the organic hydroperoxides. For completeness, included within the definition of hydroperoxides are materials such as organic peroxides or organic peresters which decompose or hydrolyze to form organic hydroperoxides *in situ:* examples of such peroxides and peresters are cyclohexyl and hydroxycyclohexyl peroxide and t-butyl perbenzoate, respectively.

In an embodiment of the invention, the radical generating thermal initiator comprises or consists of at least one hydroperoxide compound represented by the formula:

RPOOH

wherein: RP is an aliphatic or aromatic group containing up to 18 carbon atoms, and preferably wherein: R^{p} is a C₁-C₁₂ alkyl, C₆-C₁₈ aryl or C₇-C₁₈ aralkyl group.

As exemplary peroxide initiators, which may be used alone or in combination, there may be mentioned: cumene hydroperoxide (CHP); para-menthane hydroperoxide; t-butyl hydroperoxide (TBH); t-butyl perbenzoate; t-butyl peroxy pivalate; di-t-butyl peroxide; t-butyl peroxy acetate; t-butyl peroxy-2-hexanoate; t-amyl hydroperoxide; 1,2,3,4-tetramethylbutyl hydroperoxide; benzoyl peroxide; dibenzoyl peroxide; 1,3-bis(t-butylperoxyisopropyl) benzene; diacetyl peroxide; butyl 4,4-bis (t-butylperoxy) valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t-butylperoxypentane.

Without intention to limit the present invention, a further exemplary class of radical generating thermal initiators suitable for use herein are azo polymerization initiators, selected for example from: azo nitriles; azo esters; azo amides; azo amidines; azo imidazoline; and, macro azo initiators.

As representative examples of suitable azo polymerization initiators may be mentioned: 2,2'-azobis (2-methylbutyronitrile); 2,2'-azobis(isobutyronitrile); 2,2'-azobis(2,4-dimethylvaleronitrile); 2,2'-azobis(4-methoxy-2,4-dimethylvaleronitrile); 1,1'-azobis(cyclohexane-1-carbonitrile); 4,4'-azobis(4-cyanovaleric acid); dimethyl 2,2'-azobis(2-methylpropionate); 2,2'-azobis[2-methyl-N-(2-hydroxyethyl)propionamide]; 2,2'-azobis (N-butyl-2-methylpropionamide); 2,2'-azobis[2-(2-imidazolin-2-yl)propane]dihydrochloride; 2,2'-azobis[2-(2-imidazolin-2-yl)propane]; 2,2'-azobis(2-methylpropionamidine)dihydrochloride; 2,2'-azobis[N-(2-carboxyethyl)-2-methylpropionamidine]tetrahydrate; 4,4-azobis(4-cyanovaleric acid), polymer with alpha, omega-bis(3-aminopropyl)polydimethylsiloxane (VPS-1001, available from Wako Pure Chemical Industries, Ltd.); and, 4,4'-azobis(4-cyanopentanoicacic) polyethyleneglycol polymer (VPE-0201, available from Wako Pure Chemical Industries, Ltd.).

Redox initiators are a combination of an oxidizing agent and a reducing agent and may also have utility in the present invention. Suitable oxidizing agents may be selected from the group consisting of cyclic peroxides, diacyl peroxides, dialkyl peroxides, hydroperoxides, peroxycarbonates, peroxydicarbonates, peroxyesters and peroxyketals. The corresponding reducing agent may be selected from the group consisting of: alkali metal sulfites; alkali metal hydrogensulfites; alkali metal metabisulfites; formaldehyde sulfoxylates; alkali metal salts of aliphatic sulfinic acids; alkali metal hydrogensulfides; salts of polyvalent metals, in particular Co(ll) salts and Fe(ll) salts such iron(ll) sulfate, iron(II) ammonium sulfate or iron(ll) phosphate; dihydroxymaleic acid; benzoin; ascorbic acid; and, reducing saccharides, such as sorbose, glucose, fructose and/or dihydroxyacetone.

Aside from initiators, it is considered that the free radical polymerization may be conducted in the presence of chain transfer agents which act to transfer free radicals and which reduce the molecular weight of the obtained polymer and / or control chain growth in the polymerization. When added, the chain transfer agent should constitute from 0.01 to 1 wt.%, based on the total weight of polymerizable monomers.

The process for producing the (co)polymer P is preferably carried out in a manner that the (co)polymer has a number average molecular weight (Mn) of from 2000 to 50000 daltons, for example from 3000 to 25000 daltons. The amount of polymerization initiator and any chain transfer agents present will be very much determinative of the number average molecular weight of the (co)polymer, although the choice of solvent may also be important.

Without intention to limit the present invention, conventional polymerization conditions will include a temperature in the range of from 0 to 175°C, for example from 25 to 125°C or from 50 to 100°C. The polymerization pressure is generally not critical and, as such, the polymerization may be conducted at sub-atmospheric, atmospheric or super-atmospheric pressure. Pressure aside, the polymerization may be conducted, where necessary, under the exclusion of oxygen: the reaction vessel may be provided with an inert, dry gaseous blanket of, for example, nitrogen, helium and argon.

For completeness, it is considered that the present polymerization may be performed as a batch or semi-batch procedure or as a continuous procedure. As would be recognized by the skilled artisan, in the batch procedure, the monomers to be polymerized and optionally the solvent used in the polymerization procedure are charged to a reaction vessel while the majority or the total amount of the polymerization initiator is added to the reaction vessel over the course of the polymerization. In a semi-batch procedure, at least a portion - up to and including the total amount - of the polymerization initiator and solvent are initially charged to the reaction vessel: a small portion of the monomers may also be so-charged but the majority of monomers to be polymerized are added to the reaction vessel over the course of the polymerization. In a continuous process the monomers, polymerization initiator and, optionally, the solvent are continuously added to a reaction vessel and the obtained polymer is continuously discharged from the polymerization vessel.

A preference may be mentioned for the performance of the present polymerization as a semi-batch procedure. In particular, at least 75 wt.% of the total weight of monomers to be polymerized should be added to the reaction vessel over the course of the polymerization reaction.

There is no particular intention to limit the timing at which the different functional monomers (a) - c)) of the copolymer are introduced into the polymerization procedure. The monomers may be provided to the polymerization vessel at a fixed molar ratio either at the start of the polymerization (for a batch process) or through the entire polymerization process (for semi-batch and continuous processes). In the alternative, the molar ratio of the monomers types may be varied during the course of the polymerization: this is intended to encompass that embodiment where, during the course of the polymerization, only monomers a) are added to the polymerization vessel or conversely only monomers b) or monomers c) are added to the polymerization vessel. The skilled artisan may make determinations of suitable molar ratios based on the desired form or randomness of the copolymer and the reactivity ratios of the monomers.

The copolymer reaction product may be isolated and purified using methods known in the art, of which mention may be made of extraction, evaporation, crystallization, distillation and chromatography as suitable techniques. Where a free radical solution polymerization is performed, it is most convenient that the copolymer be isolated by distilling off the solvent and any unreacted starting materials under reduced pressure. Where it is intended that the (optionally purified) copolymer be stored upon production, the polymers should be disposed in a vessel with an airtight and moisture-tight seal. The storage vessel should not permit the penetration of photo-irradiation.

### HOT MELT COMPOSITIONS

As noted above, the present disclosure also provides for the use of the copolymer in reactive hot melt compositions, including reactive hot melt adhesive compositions. More specifically, there is provided a reactive hot melt composition comprising, based on the weight of the composition: from 40 to 99.99 wt.% of i) at least one copolymer as defined herein above and in the appended claims; from 0.01 to 10 wt.% of ii) at least one ionic photoacid generator (PAG); from 0 to 60 wt.% of iii) at least one tackifying resin; and, from 0 to 20 wt.% of iv) wax.

Components ii) to iv) will be described in more detail herein below.

### ii) Ionic Photoacid Generator

The hot melt compositions of the present invention include from 0.01 to 10 wt.%, for example from 0.01 to 5 wt.% based on the weight of the composition, of ii) at least one ionic photoacid generator (PAG). Upon irradiation with light energy, ionic photoacid generators undergo a fragmentation reaction and release one or more molecules of Lewis or Bronsted acid that catalyze the ring opening and addition of the pendent epoxide groups to form a crosslink. Useful photoacid generators are thermally stable, do not undergo thermally induced reactions with the forming copolymer and are readily dissolved or dispersed in the curable compositions.

Exemplary cations which may be used as the cationic portion of the ionic PAG of the invention include organic onium cations such as those described in US Patent No. 4,250,311, US Patent No. 3,113,708, US Patent No. 4,069,055, US Patent No. 4,216,288, US Patent No. 5,084,586, US Patent No. 5,124,417, US Patent No. 5,554,664 and US Patent No. 8,030,401. The references specifically encompass aliphatic or aromatic Group IVA and VIIA (CAS version) centered onium salts, with a preference being noted for I-, S-, P-, Se- N- and C-centered onium salts, such as those selected from sulfoxonium, iodonium, sulfonium, selenonium, pyridinium, carbonium and phosphonium. As specific examples thereof, mention may be made of: diaryliodonium; triarylsulfonium; triarylsulfoxonium; dialkylphenacylsulfonium; alkylhydroxyphenylsulfonium; and alkylphenyl iodonium.

As is known in the art, the nature of the counter-anion in the ionic photoacid generator (PAG) can influence the rate and extent of cationic addition polymerization of the epoxide groups of the copolymer i) with, for illustration, the order of reactivity among commonly used nucleophilic anions being SbF₆ > AsF₆ > PF₆ > BF₄. The influence of the anion on reactivity has been ascribed to three principle factors which the skilled artisan should compensate for in the present invention: (1) the acidity of the protonic or Lewis acid generated; (2) the degree of ion-pair separation in the propagating cationic chain; and, (3) the susceptibility of the anions to fluoride abstraction and consequent chain termination.

As exemplary ionic photoacid generators which have utility in the present composition, there may be mentioned: Irgacure^{™} 250, Irgacure^{™} PAG 290 and GSID26-1 available from BASF SE; Cyracure^{™} UVI-6990 and Cyracure^{™} UVI-6974 available from Union Carbide; Omnicat 320 available from IGM Resins USA Inc.; Degacure^{™} KI 85 available from Degussa; Optomer^{™} SP-55, Optomer^{™} SP-150, and Optomer^{™} SP-170 available from Adeka; GE UVE 1014 available from General Electric; and, SarCat^{™} CD 1012, SarCat^{™} KI-85, SarCat^{™} CD 1010 and CD SarCat^{™} 1011 available from Sartomer.

### iii) Tackifying Resin

The hot melt compositions of the present invention comprise from 0 to 60 wt.%, based on the weight of the composition of iii) at least one tackifying resin. Conventionally, composition should comprise from 1 to 60 wt.%, for example from 15 to 55 wt. % or from 25 to 55 wt.% of iii) said at least one tackifier, based on the weight of the composition. The or each tackifying resin included in the composition is preferably characterized by: a softening point of from 70 to 150°C.; and, a viscosity at 150°C. of less than 2000 Pa.s.

Exemplary tackifying resins which may be used alone or in combination in the present invention include: aliphatic and cycloaliphatic petroleum hydrocarbon resins; aromatic petroleum hydrocarbon resins and the hydrogenated derivatives thereof; aliphatic / aromatic petroleum derived hydrocarbon resins and the hydrogenated derivatives; polycyclopentadiene resins, hydrogenated polycyclopentadiene resins and aromatic modified hydrogenated polycyclopentediene resins; terpenes, aromatic terpenes and hydrogenated terpenes; polyterpenes, aromatic modified polyterpenes and terpene phenolics; copolymers of α-methylstyrene and a further vinyl aromatic monomer; α-methylstyrene phenolics; and, gum rosins, gum rosin esters, wood rosins, wood rosin esters, tall oil rosins, tall oil rosin esters and hydrogenated rosin esters.

As regards the inclusion of a copolymer of α-methylstyrene and a further vinyl aromatic monomer, it is preferred that said copolymer be characterized by a weight average molecular weight (Mw) of at least 40,000 daltons. And as vinyl aromatic monomers of said copolymer, mention may be made of: styrene; 4-tert-butylstyrene; o-methylstyrene; p-methylstyrene; divinylbenzene; 1,1-diphenylethylene; vinylnaphthalene; N,N-dimethyl-p-aminoethylstyrene; N,N-diethyl-p-aminoethylstyrene; and, combinations thereof.

Exemplary commercial tackifying resins having utility in the present invention include: rosin esters available from Eastman Chemical Company under the designation Foral 85 (glyceryl ester) and Formal 105 (pentaerythritol ester); Piccolyte S-10, S-25, S-70, S-85, S-100, S-115, S-125, and S-135 polyterpene resins available from Pinova; Arkon^{™} P-70, P-90, P-100, P-125, P-115, M-90, M-100, M-110 and M-120 hydrogenated C₅ and/or C₉ hydrocarbon feed stocks available from Arakawa Chemical; Eastotac^{®} H-100, H-115, H-130 and H-142R, available from Eastman Chemical Co.; Escorez^{®} 5300, 5320, 5380, 5400, 5600 and 5637, available from Exxon Chemical Co.; WINGTACK^{®} 95 and WINGTACK^{®} Extra, available from Sartomer; Regalite R9001 and Regalite S5100, available from Eastman Chemical Company; and, Sylvares ^{®} 520, 525, 540, SA85, SA100, SA115, SA120 and SA140 available from Kraton Corporation.

### iv) Wax

Waxes constitute an optional component of the composition of the present disclosure. The present hot melt composition may comprise from 0 to 20 wt.%, based on the weight of the composition, of iv) wax. When added, the composition should comprise from 0.1 to 20 wt.%, for example from 0.1 to 10 wt.% of iv) wax, based on the weight of the composition. Said wax is added to the hot melt composition to reduce the melt viscosity thereof. These waxes, which are solid at room temperature, may also be determinative of the set-up time and the softening point of the adhesive.

Without intention to limit the present invention, waxes having utility in the present invention should have a softening point of from 50 to 150°C and may include one or more of: polyethylene having a number average molecular weight (Mn) from 500 to 7500; petroleum waxes, such as paraffin wax and microcrystalline wax; synthetic waxes made by polymerizing carbon monoxide and hydrogen, such as Fischer-Tropsch wax; polyolefin waxes; and, hydrogenated animal, fish or vegetable oils.

To impart heat resistance, it is preferred that the wax of the composition comprises or consists of at least one functionalized polyolefin. The or each functionalized polyolefin included in the composition should preferably be characterized by a weight average molecular weight of from 2,000 to 20,000 daltons, for example from 2,500-15,000 daltons.

Representative olefin monomers from which the functional polyolefin is derived and which may be used alone or in combination, include but are not limited to: ethylene; propylene; butylenes; pentene; hexylene; heptene; and, octene. A preference for the use of ethylene and / or propylene may be mentioned.

Representative functionalizing monomers include: aliphatic and cycloaliphatic (meth)acrylate monomers; aromatic (meth)acrylate monomers; (meth)acrylate-functionalized oligomer; α,β-ethylenically unsaturated dicarboxylic acids containing from 4 to 6 carbon atoms and the anhydrides, monoesters, and diesters of those acids; α,β-ethytenicatty unsaturated monocarboxylic acids containing 3 to 5 carbon atoms such as acrylic acid, methacrylic acid, crotonic acid; C₁-C₁₈ alkyl esters of crotonic acid; silicone (meth)acrylate monomers, such as those taught by and claimed in US Patent No. 5,605,999 (Chu); poly(meth)acrylates of alkane polyols; poly(meth)acrylates of oxyalkane polyols; vinyl esters such as vinyl acetate, vinyl propionate and monomers of the VEOVA^{™} series available from Shell Chemical Company; vinyl and vinylidene halides; vinyl ethers such as vinyl ethyl ether; and, vinyl ketones including alkyl vinyl ketones, cycloalkyl vinyl ketones, aryl vinyl ketones, arylalkyl vinyl ketones, and arylcycloalkyl vinyl ketones.

Of the aforementioned monomers, a particular preference may be noted for the α,β-ethytenically unsaturated dicarboxylic acids containing from **4** to **6** carbon atoms and the anhydrides, C₁-C₄ alkyl monoesters and C₁-C₄ alkyl diesters of those acids. The use of fumaric anhydride, maleic anhydride and itaconic anhydride is favored, of which maleic anhydride is most favored. And good results have been obtained where the composition comprises at least one of: maleated polyethylene; maleated polypropylene; or, maleated poly(ethylene-co-propylene).

For completeness, exemplary commercial maleated polyethylene and maleated polypropylene polymers which may have utility herein include: EPOLENE E-43, G-3015, and G-3003 available from Eastman Chemical; A-C 575, A-C 573, available from Honeywell; Fusabond E and Fusabond P available from DuPont.

### Additives and Adjunct Ingredients

The hot melt compositions obtained in the present invention will typically further comprise adjuvants and additives that can impart improved properties to these compositions. For instance, the adjuvants and additives may be determinative of: elastic properties including elastic recovery; processing time; curing time; and, residual tack. Included among such adjuvants and additives are: plasticizers; stabilizers including UV stabilizers; fillers; drying agents; adhesion promoters; air release agents; defoamers; flame retardants; rheological adjuvants; and, color pigments such as titanium dioxide, iron oxides or carbon black. For completeness, it is noted that the compositions should be substantially free of solvents and non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than **50** wt.% of the total composition and preferably should not comprise more than **20** wt.% of the composition.

A *"plasticizer"* for the purposes of this invention is a substance that decreases the viscosity of the composition and thus facilitates its processability. Herein the plasticizer may constitute up to 5 wt.%, based on the total weight of the composition, and is preferably selected from the group consisting of: polydimethylsiloxanes (PDMS); diurethanes; ethers of monofunctional, linear or branched C₄-C₁₆ alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

*"Stabilizers"* for purposes of this invention are to be understood as antioxidants, UV stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols, of which Irganox 1726 is a commercial example available from BASF; thioethers; benzotriazoles; benzophenones; benzoates; cyanoacrylates; acrylates; amines of the hindered amine light stabilizer (HALS) type; phosphorus; sulfur; and, mixtures thereof.

As noted, the compositions according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

As a further filler, mention may also be made of hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The total amount of fillers present in the compositions of the present invention will preferably be from 0 to 30 wt.%, and more preferably from 0 to 20 wt.%, based on the total weight of the composition. The desired viscosity of the curable composition at its application temperature will typically be determinative of the total amount of filler added.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

As further exemplary adhesion promoters, mention may be made of glycidoxy alkyl alkoxy silanes having the formula (Bll): 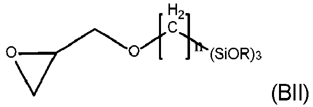 wherein: each R is independently selected from methyl or ethyl; and, n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than less than 20 wt.%, preferably less than 10 wt.% or less than 5 wt.%, based on the total weight of the copolymer i).

### Methods and Applications

The reactive hot melt adhesive composition may be formulated by bringing together the constituent ingredients in pre-determined amounts. In those embodiments where the ingredients are to be mixed, this may be performed using any of the mixing techniques known in the art: it would certainly be preferred however that the ingredients are not mixed by hand but are instead mixed by machine - a static or dynamic mixer, for example - in pre-determined amounts under anhydrous conditions and without intentional photo-irradiation.

A first representative example of a mixing procedure involves placing all the components, except the hybrid base polymer(s), in a jacketed mixing kettle equipped with a rotor, and thereafter elevating the temperature of the mixture to a temperature above the softening point of the base polymer which is to be added: a temperature of from 100°C to 160°C may be sufficient but it will be understood that the precise temperature would depend on the softening points and melting points of the particular ingredients. The polymers are subsequently introduced to the kettle under agitation and the mixing is allowed to continue until a consistent and homogenous mixture is formed. The contents of the kettle may be protected with an inert gas, such as carbon dioxide or nitrogen, during the entire mixing process.

In a second representative example of a mixing procedure, a resin or oil which is adapted to the chemistry of the base copolymer is first charged into the mixing kettle. The resin or oil is then melted or conditioned to yield a liquid to which the base copolymer(s) are then added stepwise so as to become dissolved in the liquid. The remaining ingredients are added to the mixing kettle after the addition of the base polymer.

In a further representative example, all ingredients of the composition may either be brought together or mixed homogenously together in solid form. The provided solid can then be disposed in a melting tank and brought to the requisite temperature for dispensing in a molten form. Again the precise temperature of the melting tank would depend on the softening points and melting points of the particular ingredients.

Generally, the hot melt compositions may be applied to substrates by conventional methods such as: brushing; roll coating; doctor-blade application; printing methods; jetting; omega coating; control seam coating; dot coating; and, spraying methods, including but not limited to air-atomized spray, air-assisted spray, airless spray, high-volume low-pressure spray, slot spray and curtain spray coating. In that embodiment where the hot melt composition is to be employed in potting operations, the composition would typically be introduced into a defined mold by static potting or centrifugal potting. In a static potting technique, the composition is introduced into the potting mold while the mold is substantially stationary. In centrifugal potting methods, the potting composition is introduced into a potting mold whilst the mold is rotated such that the rotation of the mold forces the potting composition towards an end of the rotating mold by centrifugal force. In either the static or centrifugal potting methods, the introduction of the hot melt composition may be either through contact or non-contact means.

For coating, adhesive and sealant applications, it is recommended that the compositions be applied to a wet film thickness of from 10 to 500 µm. In an alternative statement, which is not intended to be mutually exclusive of the above, it is recommended that the compositions be applied such that the coating weight of the compositions is from 50 to 250 grams per square metre (gsm), preferably from 50 to 150 gsm.

Central to any of the aforementioned methods of application is that the hot melt composition is sufficiently fluid upon application for it to coat the substrates to which is applied. In certain circumstances where the substrate is porous, the hot melt composition may be rendered sufficiently fluid to penetrate that substrate. It is thus preferred that the hot melt composition be characterized by a melt viscosity, as determined at 120°C, of at most 100000 mPa·s.

That aside, useful application temperatures will typically range from 100°C to 160°C or from 110°C to 150°C with lower temperatures within this range being preferred as they may extend the working life of the curable composition. The temperature of the composition may be raised above its mixing temperature to the application temperature using conventional means, including microwave induction.

Immediately after application, the applied compositions are cured under photo-irradiation. The energy source used to promote the curing of the applied compositions will emit at least one of ultraviolet (UV) radiation, infrared (IR) radiation, visible light, X-rays, gamma rays, or electron beams (e-beam). Subsequent to their application, the compositions may typically be activated in less than 2 minutes, and commonly between 0.1 and 100 seconds - for instance between 3 and 12 seconds - when irradiated using commercial curing equipment. For completeness, the activation of the compositions may be effected in an inline process wherein the coated substrate is conveyed under the curing equipment as it emits radiation: it will be understood that the aforementioned activation times will be the time of exposure of the applied compositions to the irradiation in such an inline process.

Irradiating ultraviolet light should typically have a wavelength of from 150 to 600 nm and preferably a wavelength of from 200 to 450 nm. Useful sources of UV light include, for instance, extra highpressure mercury lamps, high pressure mercury lamps, medium pressure mercury lamps, low intensity fluorescent lamps, metal halide lamps, microwave powered lamps, xenon lamps, UV-LED lamps and laser beam sources such as excimer lasers and argon-ion lasers.

Where an e-beam is utilized to cure the applied composition, standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to sufficiently cure an individual composition - such that a coating thereof becomes fixed, for example - will depend on a variety of factors including the angle of exposure to the radiation and the thickness of an applied composition. Broadly, however, a curing dosage of from 5 to 5000 mJ/cm² may be cited as being typical: curing dosages of from 50 to 500 mJ/cm², such as from 50 to 200 mJ/cm² may be considered highly effective.

The reactive hot melt compositions according to the invention may find utility *inter alia* in: casting resins; potting and encapsulation resins; binding agents for fibers and / or particles; the coating of glass; the coating of mineral building materials, such as lime- and / or cement-bonded plasters, gypsum-containing surfaces, fiber cement building materials and concrete; the coating and sealing of wood and wooden materials, such as chipboard, fiber board and paper; the coating of metallic surfaces; and, the coating and sealing of various plastic surfaces.

It is evident that the hot melt composition may be used for the bonding of first and second substrates: broadly, the composition will be applied between the two substrates and cured under photo-irradiation. Such a bonding operation may be performed using two main techniques, direct application of the hot melt composition and application via transfer which will be detailed hereinbelow. In a first embodiment, the hot melt composition may be applied to at least one surface (S¹) of a first substrate and to at least one surface (S²) of a second substrate and the respective surfaces (S¹, S²) of the first and second substrates contacted to interpose the composition. In an alternative embodiment, the hot melt composition may be applied only to a surface of the first substrate and that surface is then brought into contact with the second substrate.

The first (S¹) and second (S²) substrates may be the same or different but in either case are not particularly restricted. The substrates to be bonded may, for example, comprise or consist of: ferrous metallic materials, such as iron, stainless steel, cold-rolled steel and electro-galvanized steel; nonferrous metallic materials, such as aluminium, zinc and alloys thereof; silicon materials such as glass, monocrystal silicon, polycrystal silicon, amorphous silicon or silicon oxide; engineered plastics; thermoplastic materials such as polyolefins, of which polyethylene (PE) and polypropylene (PP) may be mentioned, polybutylene terephthalate (PBT), polycarbonate (PC) and acrylonitrile butadiene styrene (ABS); and, carbon materials, such as carbon fiber.

For completeness, the shape of the first and second substrates is also not particularly restricted, provided that the substrates have a shape which can be bonded. Desirably the first substrate to be bonded will possess a surface which has a shape complementary to a surface of the second substrate, allowing the first and second substrates to be mated with the composition disposed therebetween.

As mentioned above, the first and second substrates (S¹, S²) may be bonded together by a transfer method. Such a method comprises: (i) providing an article (A) comprising a curable film of the hot melt composition as defined above, wherein the film is disposed on a release liner and / or a carrier substrate; (ii) attaching the curable film of the article to at least one of the substrates (S¹, S²); (iii) mating the substrates (S¹, S²); and, (iv) curing the film between the substrates to be bonded together, wherein the release liner of the article (A), if present, is removed before and/or after step (ii).

The article (A) comprising a curable film of the hot melt compositions as defined above which is disposed on a release liner and / or carrier substrate represents a further aspect of the present disclosure. The article (A) may be a label, a single-sided tape, a transfer tape or a double-sided tape.

For completeness but without intention to limit the present disclosure, exemplary articles (A) will be described with reference to the appended drawings in which:
Figure 1 illustrates a single-sided tape absent a release liner according to an embodiment of the present invention.
Figure 2 illustrates an embodiment of the article of the present invention that may correspond to a single-sided tape or a label with a release liner.
Figure 3 illustrates a transfer tape with one release liner according to an embodiment of the present invention.
Figure 4 illustrates a transfer tape with two release liners according to an embodiment of the present invention.
Figure 5 illustrates a double-sided tape with one release liner according to an embodiment of the present invention.
Figure 6 illustrates a double-sided tape with two release liners according to an embodiment of the present invention.

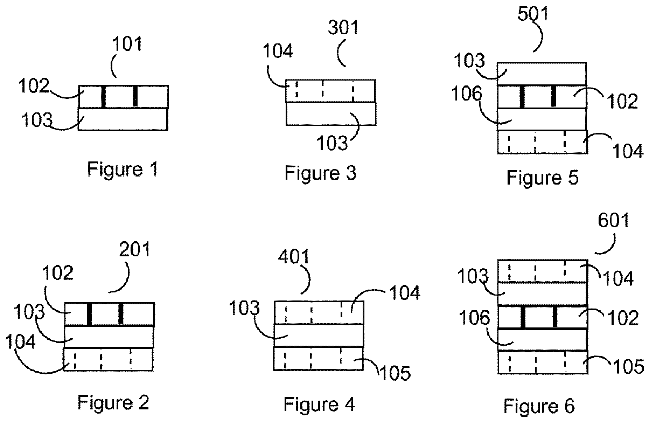

In Figure 1, a single sided tape (101) is shown which consists of a carrier (102) and a curable film (103). The embodiment depicted in Figure 2 could be either a single sided tape or a label (201), which tape or label consists of a carrier (102) and a curable film (103): the curable film (103) is covered with a release liner (104) to protect the curable film and prevent unwanted adhesion of the curable film (103).

Figures 3 and 4 depict transfer tapes which have particular utility for transferring the curable film from a release liner to a target surface (S¹, S²). In Figure 3, the transfer tape (301) consists of a release liner (104) coated with a curable film (103) of the hot melt composition. The release liner (104) should have release properties on both sides but should not possess equivalent release properties on those sides: consequently, when winding and unwinding the transfer tape (301) from a roll - there will be a differentiation between the release effects on the two sides of the release liner (104).

In Figure 4, the transfer tape (401) consists of a curable film (103) interposed between first (104) and second (105) release liners. The first (104) and second (105) release liners may have different release properties relative to the curable film which allows these liners (104, 105) to be removed independently of one another.

A double-sided adhesive tape (501) is depicted in Figure 5 and consists of a carrier (102) having a first curable film (103) on a first side of the carrier (102) and a second curable film (106) on a second side of the carrier (102). The first (103) and second (106) curable films may be the same of different in that they may be obtained from the same or different hot melt compositions subject to the proviso that at least one of said hot melt compositions is provided in accordance with the present disclosure. A release liner (104) covers and protects the second curable film (106), which liner (104) should have release properties on both sides but should not possess equivalent release properties on those sides. In these circumstances - when winding and unwinding the transfer tape (501) from a roll - there will be a differentiation between the release effects on the two sides of the release liner (104).

A second embodiment of a double-sided adhesive tape (601) is provided in Figure 6. The depicted tape (601) consists of a carrier (102) having a first curable film (103) on a first side of the carrier (102) and a second curable film (106) on a second side of the carrier (102). The first (103) and second (106) curable films may be the same of different, that is they may be obtained from the same or different hot melt compositions subject to the proviso that at least one of said hot melt compositions is provided in accordance with the present disclosure. A first release liner (104) covers and protects the first curable film (103). A second release liner (105) covers and protects the second curable film (106). The first (104) and second (105) release liners may have different release properties relative to the curable films (103, 106).

In forming the aforementioned article (A), the hot melt compositions may be applied to the release liner(s) and / or the carrier and then cooled. The cooling can be carried out, for example, by applying the hot melt composition to the substrate which is conveyed by a coating roll having chilled water circulating through its interior. Alternatively, the hot melt composition and the substrate - or a thermoplastic precursor of the substrate - can be co-extruded as a laminate, which laminate is then cooled and optionally stretched to induce the partial orientation and crystallization.

Manufacturing process parameters - including *inter alia* the particular composition used, the applied thickness thereof and the operating conditions of the manufacturing equipment - can, of course, affect the degree of orientation and, as a result, the anisotropic, tack and peel force properties of the pressure sensitive adhesive. For example, if the cooling rate is slow, the cooled pressure sensitive adhesive may have high tack and isotropic peel force. As the cooling rate is accelerated, the pressure sensitive adhesive will have less tack and the peel force will be more anisotropic. At fast cooling rates, the cooled pressure sensitive adhesive may have quite low pressure-sensitive tack and low or imperceptible peel force.

The following examples are illustrative of the present invention and are not intended to limit the scope of the invention in any way.

### EXAMPLES

The following compounds were used in the Examples:
4-(methacryloyloxy)benzophenone: Radical cured photoinitiator, available from Molbase. bis[4-diphenylsulfoniumphenyl]sulfide-bishexafluoroantimonate: Photoacid generator; available from Toronto Research Chemical. Thiophenoxyphenylsulfonium hexafluoroantimonate: Photoacid generator, available from Toronto Research Chemicals. 3,4-epoxycyclohexyl methyl methacrylate: Monomer, Epoxy Equivalent Weight 200 g/eq, available from Synasia. 2-ethylhexyl acrylate: Monomer, available from Sigma Aldrich. Methyl acrylate: Monomer, available from Sigma Aldrich. Butyl acrylate: Monomer, available from Sigma Aldrich. Acrylic acid: Monomer, available from Sigma Aldrich.

The following abbreviations are applied in the Examples: RT: Room Temperature; AF: Adhesive Failure; CF: Cohesive Failure; TF: Transfer Failure; HDPE: High density polyethylene; PP: Polypropylene; PVC: Polyvinylchloride; PS: Polystyrene; PMMA: polymethylmethacrylate; ABS: Acrylonitrile butadiene styrene; PA: Polyamide.

The following analytical tests were conducted on the hot melt compositions mentioned herein below. For completeness, the peel strength tests, static shear tests and shear adhesion failure tests (SAFT) were performed at: a number of different coating weights (*gram per square metre, gsm*); and, a number of different dosages of UV-radiation for the curing of the reactive hot melt compositions.

*Viscosity:* The viscosities given herein have been measured at 120°C, 130°C and 140°C, employing a Thermosel heating chamber containing an 11g sample of the material and a Brookfield Viscometer Spindle 27 at 1-5 rpm, according to ASTM D 3236-88.

*Peel strength:* This parameter was measured as follows in accordance with International Standards Organization (ISO) Standard 29862. Each adhesive member was cut into a 25 mm×150 mm film which was then laminated on a standardized adherend by rolling a 2 kg roller back and forth for 3 strokes at a rate of 10 mm/s. The laminate was left standing for a pre-determined time at room temperature. The adhesive film was peeled off the surface of the adherend at a defined speed of 300 mm / min in a 180-degree direction. The force (*peel force*) required for such peeling was measured and recorded as the bond strength (N/inch).

*Shear Adhesion Failure Test (SAFT):* The instrument ES 07-II, commercially available from Elastocon, was used to test the hot-fail temperature of hot melt compositions under shear in accordance with ASTM D4498. Each adhesive member was cut into a 25 mmx 25mm film which was then laminated on a standardized adherend by rolling a 2 kg roller back and forth two times at a rate of 10 mm/s. A weights (1kg) was attached to each member and the temperature was increased from room temperature at controlled rate (0.5°C/min) until either a temperature of 200°C is attained or the adhesive member failed.

### Part 1: Copolymer and Hot Melt Composition Preparation

Three copolymers were individually prepared by free radical solution polymerization in ethyl acetate according to the monomer composition given in Table 1. The weight percentage given in Table 1 corresponds to the weight of each identified monomer based on the total weight of monomers.

**Table 1**

| Monomer | Copolymer 1 (CP1, wt.%) | Copolymer 2 (CP2, wt.%) | Copolymer 3 (CP3, wt.%) |
|---|---|---|---|
| 2-ethylhexyl acrylate | 52.1 | 52.2 | |
| Methyl acrylate | 46.7 | 46.7 | |
| Butyl acrylate | | | 93.1 |
| Acrylic acid | | | 6.3 |
| Methyl methacrylate | 0.4 | | 0.4 |
| 4-(methacryloyloxy)benzophenone | 0.2 | | 0.2 |
| 3,4-epoxycyclohexyl methyl methacrylate | 0.6 | 1.1 | |

At the conclusion of the polymerizations of Copolymer 1 and Copolymer 2, cationic photoinitiators were added to the reaction vessels. The solvent was removed by distillation to yield hot melt compositions as defined in Table 2 below.

**Table 2**

| Ingredient | Example 1 (wt.%) | Comparative Example 1 (wt.%) | Comparative Example 2 (wt.%) |
|---|---|---|---|
| CP1 | 99.4 | | |
| CP2 | | 99.2 | |
| CP3 | | | 100 |
| PAG | 0.2 | 0.4 | |
| Stabilizer | 0.4 | 0.4 | |

### Part 2: Viscosity Characterization

The exemplified hot melt compositions are solid at room temperature but possess the temperature-dependent viscosity characteristics defined in Table 3 below.

**Table 3**

| Temperature of Viscosity Measurement | Example 1 (m.Pas) | Comparative Example 1 (m.Pas) | Comparative Example 2 (m.Pas) |
|---|---|---|---|
| 120 | 90500 | 74500 | 116000 |
| 130 | 57300 | 48900 | 75000 |
| 140 | 44600 | 34000 | 54100 |

### Part 3: Performance of Hot Melt Compositions at 65 gsm Coating Weight

The peel strengths of the example and comparative examples were investigated on a steel adherend, when applied to a coating weight of 65 gsm and after being cured at a UV dosage of 65 mJ. The results of these tests are given in Table 4 below.

**Table 4**

| Hot Melt Composition | UV-Curing Dosage (mJ) | Coating Mode | Peel Strength on Steel after 24 hours | | Shear Adhesion Failure Test (SAFT) at 0.5°C/min,1kg load | |
|---|---|---|---|---|---|---|
| | | | Strength (N/inch) | Failure Mode | Result (°C/inch²) | Failure Mode |
| Example 1 | 65 | Direct | 21 | AF+CF | 200 | |
| | 65 | Transfer | 23 | AF | 200 | |
| Comparative Example 1 | 65 | Direct | 12 | AF+CF | 200 | |
| | 65 | Transfer | 15 | AF+CF | 200 | |
| Comparative Example 2 | 65 | Direct | 19 | AF+CF | 102-158 | AF+CF |
| | 65 | Transfer | 22 | AF+CF | 85-112 | AF+TF |

Part 4: Performance of Hot Melt Compositions at Higher Coating Weights The peel strength of the example and comparative examples were each investigated on a steel adherend, when applied to a coating weight of either 80 or 100 gsm and after being cured at a UV dosage of either 80 or 100 mJ. The results of these tests are given in Table 5 below.

**Table 5**

| Hot Melt Composition | UV-Curing Dosage (mJ) | Coating Weight (gsm) | Coating Mode | Peel Strength on Steel after 24 hours | | Shear Adhesion Failure Test (SAFT) at 0.5°C/min,1kg load | |
|---|---|---|---|---|---|---|---|
| | | | | Strength (N/inch) | Failure Mode | Result (°C/inch²) | Failure Mode |
| Example 1 | 80 | 80 | Direct | 21 | AF | 200 | |
| | 100 | 100 | Direct | 21 | AF | 200 | |
| | 100 | 100 | Transfer | 28 | AF+CF | 79-126 | |
| Comparative Example 1 | 80 | 80 | Direct | 17 | AF+CF | 200 | |
| | 100 | 100 | Direct | 17 | AF+CF | 200 | |
| | 100 | 100 | Transfer | 21 | AF+CF | 73 - 134 | AF+TF |
| Comparative Example 2 | 80 | 80 | Direct | 22 | AF+CF | 132-164 | CF |
| | 100 | 100 | Direct | 21 | AF | 92-160 | AF+CF |
| | 100 | 100 | Transfer | 29 | AF+CF | 90-112 | TF |

Part 5: Performance of Hot Melt Compositions at 80 gsm Coating Weight on Distinct Adherends The peel strength of the example and comparative examples were each investigated on a number of different adherends, when applied to a coating weight of 80 gsm and after being cured at a UV dosage of 80 mJ. The results of these tests are given in Table 6 below.

**Table 6**

| Adherend | Example 1 | | Comparative Example 1 | | Comparative Example 2 | |
|---|---|---|---|---|---|---|
| | Peel Strength after 24 hours | | Peel Strength after 24 hours | | Peel Strength after 24 hours | |
| | Strength (N/inch) | Failure Mode | Strength (N/inch) | Failure Mode | Strength (N/inch) | Failure Mode |
| Steel | 21 | AF | 17 | AF+CF | 22 | AF+CF |
| Glass | 24 | AF | 17 | AF+CF | 26 | AF+CF |
| Aluminium | 16 | AF | 15 | AF+CF | 24 | AF+CF |
| HDPE | 6 | AF | 6 | AF | 7 | AF |
| PP | 9 | AF | 9 | AF | 8 | AF |
| PVC | 28 | AF | 12 | CF | 28 | CF |
| PS | 26 | AF | 14 | CF | 26 | CF |
| PMMA | 30 | AF+CF | 12 | CF | 27 | CF |
| ABS | 27 | AF+CF | 12 | CF | 27 | AF+CF |
| PA | 19 | AF | 15 | AF+CF | 23 | AF+CF |

In view of the foregoing description and examples, it will be apparent to those skilled in the art that equivalent modifications thereof can be made without departing from the scope of the claims.

## Claims

1. A copolymer obtained by free radical polymerization, said polymer comprising, based on the total weight of monomers:
from 0.01 to 10 wt.% of a) at least one co-polymerizable photoinitiator having an ethylenically unsaturated group and a moiety that is decomposable under photo-irradiation to form a radical;
from 0.01 to 10 wt.% of b) at least one epoxy (meth)acrylate monomer having at least one (meth)acrylate group and at least one epoxide group; and,
from 80 to 99.98 wt.% of c) at least one ethylenically unsaturated monomer which does not bear an epoxide group or a moiety decomposable under photo-irradiation to form a radical.

2. The copolymer according to claim 1 comprising, based on the total weight of monomers:
from 0.05 to 5 wt.%, preferably from 0.05 to 2.5 wt.% of a) at least one co-polymerizable photoinitiator having an ethylenically unsaturated group and a moiety that is decomposable under photo-irradiation to form a radical;
from 0.05 to 5 wt.%, preferably from 0.5 to 5 wt.% of b) at least one epoxy (meth)acrylate monomer having at least one (meth)acrylate group and at least one epoxide group; and
from 90 to 99 wt.% of c) at least one ethylenically unsaturated monomer which does not bear an epoxide group or a moiety decomposable by photo-irradiation to form a radical.

3. The copolymer according to claim 1 or claim 2, wherein a) said at least one co-polymerizable photoinitiator is represented by the general formula A-(B)_{b}, wherein:
A represents a substituent having a valency b which comprises at least one moiety decomposable under photo-irradiation to form a radical;
B represents a moiety comprising an ethylenically unsaturated group; and,
b is an integer of from 1 to 3, preferably 1 or 2.

4. The copolymer according to claim 3, wherein in general formula A-(B)_{b}:
A represents a substituent having a valency b which comprises at least one moiety decomposable under photo-irradiation to form a radical, the or each said moiety comprising a group selected from acetophenone, benzophenone, benzoin, anthraquinone, 9-fluorenone, anthrone, xanthone, thioxanthone, acridone, dibenzosuberone or chromone;
B represents a moiety comprising a (meth)acrylate group or a (meth)acrylamide group; and,
b is 1 or 2.

5. The copolymer according to any one of claims 1 to 4, wherein a) said at least one co-polymerizable photoinitiator comprises or consists of at least one monomer in accordance with Formula (I): 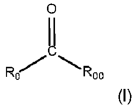
wherein: R⁰ is a C₁-C₄ alkyl, C₆-C₁₈ aryl or R⁰⁰; and, R⁰⁰ has the structure; 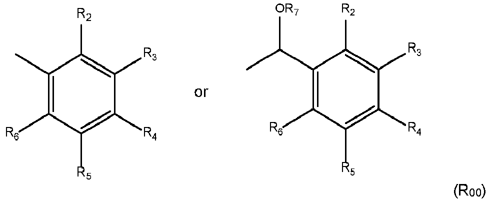
wherein:
R² to R⁶ are independently selected from H, OH, SH, halide, CN, C₁-C₄ alkyl,
C₁-C₄ alkoxy, SR⁸, COOH, COOR⁸, N(R⁸)2 or N(R⁸)₃Q;
R⁷ is H or C₁-C₄ alkyl;
each R⁸ is independently selected from C₁-C₆ alkyl or C₆-C₁₈ aryl;
Q is halide, acetate, phosphate, sulphate or nitrate,
subject to the proviso that j of the radicals R² to R⁶ are a radical 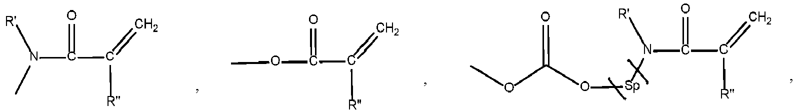 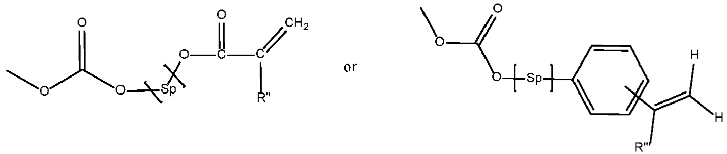
wherein:
j is an integer of from 1 to 3, preferably 1 or 2;
each R' is independently selected from H, C₁-C₄ alkyl or C₆-C₁₈ aryl;
R" is H or C₁ alkyl;
R"' is H or C₁ alkyl; and,
Sp denotes a spacer group of the following type:
-[-{(X)ₖ-Y}ₗ-(X)ₘ-]- or -[-{(X)ₖ-Y}ₗ-{(X)ₘ-Y}ₙ]-
wherein:
k is an integer of from 1 to 10
l is in an integer of from 0 to 25;
m is an integer of from 1 to 10;
n is an integer of from 0 to 25;
each X is independently selected from C₂-C₁₂ alkylene, C₃-C₁₈ cycloalkylene or C₆-C₁₈ arylene; and,
each Y is a divalent radical independently selected from the group consisting of:

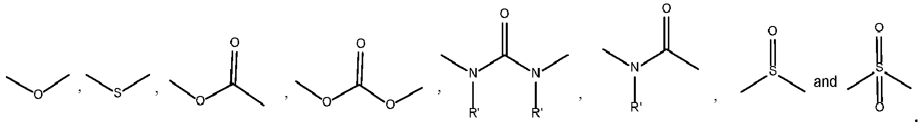

6. The copolymer according to claim 5, wherein in Formula (I):
R⁰ is C₁-C₄ alkyl or C₆ aryl;
R² to R⁶ are independently selected from H, OH, C₁-C₄ alkyl and C₁-C₄ alkoxy;
R⁷ is C1 alkyl;
each R⁸ is independently selected from C₁-C₆ alkyl; and,
each R' is independently selected from H, C₁-C₄ alkyl or C₆ aryl.

7. The copolymer according to claim 6, wherein in Formula (I):
R² to R⁶ are independently selected from H and C₁-C₄ alkyl;
each R⁸ is independently selected from C₁-C₄ alkyl.

8. The copolymer according to any one of claims 1 to 7, wherein a) said at least one co-polymerizable photoinitiator is benzophenone (meth)acrylate.

9. The copolymer according to any one of claims 1 to 8, wherein b) said at least one epoxy (meth)acrylate monomer is **characterized by** an equivalent weight of the total of said epoxide and said (meth)acrylate groups of from 100 to 700 g/eq, preferably 120 to 320 g/eq.

10. The copolymer according to any one of claims 1 to 9, wherein said at least one epoxy (meth)acrylate monomer is an adduct of (meth)acrylic acid and a polyepoxide compound.

11. The copolymer according to claim 10, wherein said polyepoxide compound is selected from the group consisting of: polyglycidyl ethers of polyhydric alcohols; polyglycidyl ethers of polyhydric phenols; polyglycidyl esters of polycarboxylic acids; and, epoxidized polyethylenically unsaturated hydrocarbons.

12. The copolymer according to claim 10 or claim 11, wherein said polyepoxide is a diglycidyl ether selected from the group consisting of: diglycidyl ethers of aliphatic and cycloaliphatic diols; bisphenol A based diglycidylethers; bisphenol F diglycidyl ethers; polyalkyleneglycol based diglycidyl ethers; and, polycarbonatediol based glycidyl ethers.

13. A material which is crosslinkable under photoirradiation, said material comprising:
a copolymer as defined in any one of claims 1 to 12; and,
at least one ionic photoacid generator (PAG).

14. A reactive hot melt composition which is crosslinkable under photoirradiation, said composition comprising, based on the weight of the composition:
from 40 to 99.99 wt.% of i) at least one copolymer as defined in any one of claims 1 to 12;
from 0.01 to 10 wt.% of ii) at least one ionic photoacid generator (PAG);
from 0 to 60 wt.% of iii) at least one tackifying resin; and,
from 0 to 20 wt.% of iv) wax.

15. A coating, adhesive or sealant obtained by the crosslinking under photoirradiation of the reactive hot melt composition as defined in claim 14.

16. A hot melt pressure sensitive adhesive (HMPSA) obtained by the crosslinking under photoirradiation of the reactive hot melt composition as defined in claim 14.

17. An article (A) comprising a curable film of the hot melt compositions as defined in claim 14, said film being disposed on a release liner and / or a carrier substrate.

18. The article (A) according to claim 17 which is a label, a single-sided tape, a transfer tape or a double-sided tape.
